# EUROPEAN PATENT APPLICATION

(11) **EP 2 380 772 A1**
(43) Date of publication of application: **26.10.2011**
(21) Application number: 10160551.7
(22) Date of filing: 21.04.2010
(51) Int. Cl.: B60P 3/41, B62D 53/06

(54) **Trailer and methods for raising and transporting a large rigid load**

(71) Applicant: SIEMENS AKTIENGESELLSCHAFT, 80333 München (DE)
(72) Inventor: Poulsen, Henning, 6900, Skjem (DK); Westergaard, Jan Emil, 7330, Brande (DK)

(57) **Abstract**

The invention concerns a trailer (1) for raising and transporting a large rigid load (67, 71) at at least a first longitudinal end (M) comprising a rigid carrier structure (13) with a first end region (A) and a second end region (B) resting - in a loading position - on the ground in a first location (L₁) directly by means of a first roller (11) and in a second location (L₂) by a second roller (9) either directly, or indirectly via a first hinge (7) with a horizontal rotation axis (a₁), which carrier structure (13) is essentially horizontally orientated in the loading position. The trailer (1) further comprises a fixing arrangement (17, 19) to fix the load (67, 71) at its first longitudinal end (M) to the trailer (1) at a fixing point at the second end region (B) of the carrier structure (13) which is closer to the first roller (11) than to the second roller, and a raising arrangement (13, 15, 25) to raise the carrier structure (13) in the region of the first location (L₁) so that in a transport position the first roller (11) loses contact with the ground. The invention also concerns a method for raising a large rigid load (67, 71) by means of such trailer (1).

## Description

Trailer and methods for raising and transporting a large rigid load

The present invention concerns a trailer for raising and transporting a large rigid load at at least one longitudinal end. It also concerns methods for raising and for transporting such load.

When trying to transport large loads, i. e. transport goods, a user is confronted with a number of obstacles which the transport of normally-sized loads does not imply. Normally-sized loads in this context may be considered such loads which have a size and/or weight that allows transport by standard means of transport such as standard lorries, whereas large loads are usually way above that size and/or weight.

For instance, large rigid loads that need to be transported over shorter or even over longer distances are wind turbine components of large offshore or onshore wind turbines, such as tower segments, nacelles, hubs and blades. For instance, a tower of a typical 2,3 MW wind turbine weighs about 100 tons, has a maximum diameter of 4,2 metres and a longitudinal extension of up to 36 metres. Components of such objects cannot be transported by normally-sized lorries or even by standard heavy goods vehicles but rather need extra transport and lifting equipment.

WO 2004/101313 A1 describes a transport system for a wind turbine component in which a trailer pulled by a tractor and a dolly are used at either longitudinal ends of a wind turbine component. Both the trailer and the dolly comprise a crane which lifts the component at its respective end so that the component is suspended at either side.

The use of cranes implies, however, that both the trailer and the dolly must have a substantial length in order to equalize the loads put upon them and to be sufficiently stable. This length adds to the overall length of the whole train which is already very large due to the extension of the wind turbine component. In addition, both the trailer and the dolly would typically rest on a large number of wheelsets in order to increase stability.

Therefore, manoeuvring such train is extremely difficult, especially in typical application fields such as transporting a wind turbine component from a railway train onto a ship which takes it further to an offshore location. In the surroundings of harbours, space is extremely limited and manoeuvring therefore highly difficult anyway.

It is therefore the object of the invention to simplify the transport, in particular the raising, of such large loads.

According to the invention, this object is met by a trailer according to claim 1 and a method for raising a load according to claim 9 and by a method for transporting s load according to claim 15.

Thus, a trailer of the aforementioned kind comprises a rigid carrier structure with a first end region and a second end region resting in a loading position on the ground in a first location directly by means of a first roller and in a second location by a second roller either directly or indirectly via a first hinge with a horizontal rotation axis, which carrier structure is essentially horizontally orientated in the loading position. The trailer further comprises a fixing arrangement to fix the load at its first longitudinal end to the trailer at a fixing point at the second end region of the carrier structure which is closer to the first roller than to the second roller, and a raising arrangement to raise the carrier structure in the region of the first location so that in a transport position the first roller loses contact with the ground.

The expression "rigid" is considered to be a synonym of "stiff", which means that overall shape may be changed up to a certain maximum extent, e. g. a little bending may occur.

As for the definition of "trailer", it should be noted that this expression may include both trailers suspended on a supporting vehicle such as a tractor or solitary trailers which are commonly referred to as dollies. A trailer may comprise a traction means of its own or - as preferred - be pulled by means of a tractor, which eliminates a lot of weight for the incorporation of a traction means and its power supply.

A "roller" is understood to be a rolling means such as (according to a preferred embodiment of the invention) a wheel or wheelset which rolls over a ground. Generally, a roller in the context of the invention is an object with lower friction forces than a plane object of the same extension when torn along a surface. Thus, in a broader sense, a roller can for instance also be a gliding means such as a runner. The use of such gliding means can be particularly useful in winterly weather conditions such as in regions in which snow or ice are present most or even all of the time of the year. It is most preferred to have a number of rollers along an axle, whereby a set of rollers along the same axle would then be seen as one roller in the sense of the definition.

In the context of the invention, the carrier structure may also rest indirectly via a hinge on the second roller. In such case, the second roller is not necessarily part of the trailer, but may be a part of a tractor, for example, to which the trailer is attached via that hinge.

A "loading position" is considered to be such state of the trailer when it is ready to get a load loaded on it, i.e. with no load loaded or with a load loaded but not raised into a position in which it can be transported. In contrast, a "transport position" is such that the load is loaded and positioned at least at one end in such way that it can be safely transported.

Thus, instead of lifting the load at either end by a crane construction, it is raised at least on one end by a trailer. The one roller (or set of rollers) of the trailer can be raised so that by raising the roller the load is automatically raised as well. A crane would, by contrast, expose the load to a lifting force from above via an attachment means, while in the context of the invention, the raising force is preferably applied at the bottom of the load. The trailer itself, in particular the carrier structure, becomes part of the raising mechanism, and thus its dimensions can be smaller than that of trailers according to the state of the art. In addition, by raising at least one roller of the trailer, the trailer rests on less rollers than would normally be the case which, again, makes manoeuvring a lot easier.

In accordance with the invention, the above-mentioned method comprises the following steps:
a) transporting to the first longitudinal end a first trailer with a rigid carrier structure with a first end region and a second end region resting in a loading position on the ground in a first location directly by means of a first roller and in a second location by a second roller either directly or indirectly via a first hinge with a horizontal rotation axis, which carrier structure is essentially horizontally orientated in the loading position,
b) fixing the load at its first longitudinal end to the first trailer at a fixing point which is closer to the first roller than to the second roller,
c) raising the load at the first end by raising the carrier structure in the region of the first location so that in a transport position the first roller loses contact with the ground,
d) raising the load at its second end.

As the trailer need not necessarily be equipped with its own traction means, transporting it to the load can be realized by pulling the trailer by a tractor or for example by moving it with a forklift.

Then use is made of the raising arrangement to raise the carrier structure into the region of the first location so that the first roller loses contact with the ground, with the positive effect described above.

The invention also concerns a transport system comprising a tractor and at least one trailer according to the invention.

In addition, the invention also includes a method for transporting a large rigid load comprising the steps of raising the load by means of a raising method according to the invention and moving the raised load by directly or indirectly moving by motor power at least one of the trailers. Moving the first trailer directly implies that the trailer is equipped with its own traction means while an indirect movement means attaching the trailer to a tractor which moves it or using the trailer as a dolly attached to the load which is moved by traction means - again directly or indirectly.

It may be noted that according to particularly preferred embodiments, the methods according to the invention are carried out in areas with no limits to possible wheel loads, i.e. away from public roads. This is due to the fact that enormous weights can be raised and transported using trailers according to the invention. Thus, the areas in which the methods are used can be reaized such that the ground withstands higher loads than on public roads. However, the invention is not exclusively limited to such areas.

Particularly advantageous embodiments and features of the invention are given by the dependent claims, as revealed in the following description. Thereby, features revealed in the context of the trailer may also be realized in the context of the raising method and the other way round.

According to a particularly preferred embodiment of the invention, the trailer comprises a substantially triangular frame consisting of
- the carrier structure,
- a rigid, essentially vertical structure with a lower end region and an upper end region fixed rotatably around a horizontal axis to the carrier structure via a hinge connecting the second end region of the carrier structure with the lower end region of the vertical structure,
- a connection structure extendable in length and fixed rotatably around horizontal axes by means of hinges at one end to the first end region of the carrier structure and at the other end to the upper end region of the vertical structure.

In the context of the raising method according to the invention, the connection structure is extended in length in order to raise the first roller.

This effect is achieved because extending the length of one side in a triangle while leaving the lengths of the other sides as they were before means that the angles of the triangle are altered. When the connection structure is extended, the angle between the carrier structure and the vertical structure will be increased. When leaving the orientation of the vertical as it had been before, this means that the orientation of the carrier structure is altered and that a force is applied to the carrier structure raising it at that end where it is connected to the vertical structure. The carrier structure is thus raised at the end where the load is attached.

The raising means is therefore preferably realized by a geometrical arrangement of two rigid structures and the connection structure which can be extended and which thus moves at least one of the other two structures - in this case the carrier structure. An indirect raising effect is the result. By using this effect, the raising means can be realized as a smaller unit which operates in the inventive way, i.e. by raising the first roller of the trailer. It may be noted that preferably during the raising operation, only one of the three structures, i.e. the connection structure is extended while the other two structures are kept at a constant length. They may be extendable for other purposes outside the function of the method according to the invention, but in the context of the inventive method their length is preferably fixed in order not to undermine the raising effect described above.

Preferably, the connection structure is extendable by means of a hydraulic cylinder. This way it can be made sure that even high forces can be applied in order to extend the connection structure as wished for. In addition, a hydraulic cylinder is easy to control and maintains its length even when under high forces. Nevertheless, additional mechanical security fixing may be used in order to increase the safety, stability and reliability of the connection structure.

In such a triangular structure, the axes of all said hinges are preferably all parallel. This way, an optimum transfer of forces is achieved which results in a well-controllable and easily realizable raising process with as little loss of power as possible.

As the force to raise the load preferably is applied at a point underneath the load rather than at a point above the load (as would be the case with a crane mechanism to lift the load), it has proven advantageous to also locate the fixing arrangement in a region of the lower end of the vertical structure. Additional fixing arrangements that are located in another region, e.g. the region of the upper end of the vertical structure, may be used to add more stability, however, it does suffice in principle to have one fixing arrangement located at the lower end.

Preferably, the vertical extension of the vertical structure has at least half the length of the load in an extension perpendicular to its longitudinal direction. For example, when transporting a tower segment of a wind turbine with a diameter of 4,2 metres, the vertical structure should at least be 2,1 metres in height. This way it is made sure that enough constructional stability is reached because the load has enough of a contact surface with the vertical structure.

According to a particularly preferred embodiment of the invention, in order to raise the first roller, the carrier structure is tiltable - fully or in part - around a tilting axis, which tilting axis is preferably arranged vertically above the second roller or at a distance removed from the second roller in a direction away from the first roller.

Thus, such tilting axis can be located in the region of the second location, either in the second roller or as the horizontal axis of the first hinge. For instance, the roller can be raised by raising the carrier structure at its second location, while its first location rests on the hinge along whose axis the carrier structure is tilted. Alternatively, the tilting occurs via an axis in the second roller, e. g. the wheel axle of a wheelset. Then, the carrier structure is not plane, but has a non-linear extension with one longitudinal end standing up away from the ground, while the other longitudinal end rests on the ground, e. g. via a roller. When applying a sufficient downward force to the longitudinal end standing up away from the ground, that end will be lowered to the ground, while the other end will be raised along the tilting axis located in the axle of the wheelset.

By locating the tilting axis above the second roller or beyond it in a direction away from the first roller, the stability of the trailer during tilting is higher than if the axis was closer to the first roller. This is due to the fact that the point of gravity would otherwise lie between the first and the second roller so once one tries to lift the first roller, rather the whole trailer will automatically tilt around the axis defined by the second roller. That means that no raising effect occurs, but rather the trailer become instable.

In addition, the forces necessary to tilt the carrier structure, i.e. to raise it at the end region in which the first roller is situated, are considerably lower than otherwise.

In a transport system according to the invention, the trailer is preferably attached to the tractor via the first hinge. The connection between the tractor and the trailer thus comprises the hinge. Such hinge, which can be realized as a fifth-wheel coupling, can be very flexible so that it comprises the one horizontal axis, but also a vertical axis. This way, transporting the load can be simplified, as manouevring becomes easier. It may be noted that in such context, the second roller is not part of the trailer but rather of the tractor. Via the hinge, the trailer is connected to the second roller and rests on it.

Accordingly, in the raising method according to the invention the carrier structure can generally be rotated around a horizontal rotation axis, preferably of a first hinge. Preferably, in step a) of the method the horizontal axis of the first hinge is positioned in an essentially perpendicular orientation to the logitudinal extension of the load.

A transport system according to the invention can be realized in which the load rests on a trailer according to the invention at its one longitudinal end and for example on a tractor on its other end. However, it has proven easier to raise the load on trailers at both its longitudinal ends. Thus, such transport system comprises two trailers connectable to a large rigid load at both of its longitudinal ends. In this context, according to a first alternative embodiment the two trailers are both realized according to the invention, because one standard method with all the advantages given above can be used to raise the load at either end, either simultaneaously or successively.

Accordingly, in a raising method according to the invention the load is then raised at its second longitudinal end by a second trailer in the same manner as in steps a) to c). Concerning the second trailer, its carrier structure is preferably also rotated around a horizontal rotation axis.

A second alternative embodiment using two trailers makes use of a different kind of trailer at one longitudinal end and of a trailer according to the invention at the other longitudinal end only. Such an embodiment of the invention is realized by raising the load at its second longitudinal end by a second trailer comprising a rigid carrier structure connected to the ground in both a first and a second location directly by a first and a second roller, which carrier structure is essentially horizontally orientated in a loading position and in a transport position which transport position is defined by a greater distance of the carrier structure from the first and/or second roller in comparison with the loading position. Such trailer may for example also be realized as a forklift, but can also be a non-motorized trailer.

Using such second trailer of the alternative kind instead of a trailer according to invention may mean a simpler construction. All the rollers of such second trailer on which it rests in a loading position will remain on the ground while the load is raised. This way, the trailer can be a small unit. Such construction is particularly useful for the realization of a dolly, while not primarily for a trailer connected to a tractor (although this is explicitly not ruled out) because of the number of wheels resting on the ground: A trailer according to the invention needs only one contact point with the ground. In the case of a trailer attached to a tractor, this contact point can be realized via the connection to the tractor. In contrast, a trailer of the alternative kind has at least two contact points, typically two wheelsets, which make contact with the ground. Attaching such a less flexible trailer of the alternative kind to a tractor means a loss of movement flexibility overall.

When using a trailer of the alternative kind to reach the transport position, the carrier structure of this trailer is preferably distanced from the first and/or second roller by means of a hydraulic raising system incorporated in the second trailer. Hydraulic systems have the advantage of high reliability and their ability to raise big loads such as the large loads of this application. Again, additional mechanical security fixing may be used in order to increase the safety, stability and reliability of the hydraulic system.

Generally, the flexibility of the transport system - whether it comprises only trailers according to the invention or also a different trailer can be increased by using rollers the orientation of which is adaptible, preferably steerable. This way, the rollers can be orientated in such a way that a smallest possible radius can be achieved when the transport system has to drive around a curve for example.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows in a side view an embodiment of a transport subsystem according to the invention with a tractor and an embodiment of a trailer according to the invention in a loading position.
Fig. 2 shows the same transport system as in Fig. 1 in a top view.
Fig. 3 shows in a side view a dolly realized as a trailer of the alternative kind in a loading position.
Fig. 4 shows the same dolly as in Fig. 3 in a top view.
Fig. 5 shows in a side view the same dolly as in Fig. 3 and Fig. 4 in a transport position.
Fig. 6 shows in a side view a transport system according to an embodiment of the invention comprising elements from Figs. 1 und 3 in a loading position.
Fig. 7 shows the same transport system as in Fig. 6 in a transport position.
Fig. 8 shows in a side view a transport system according to another embodiment of the invention in a loading position.
Fig. 9 shows the same transport system in a transport position.

In the drawings, like reference numbers refer to like objects throughout. Objects in the diagrams are not necessarily drawn to scale.

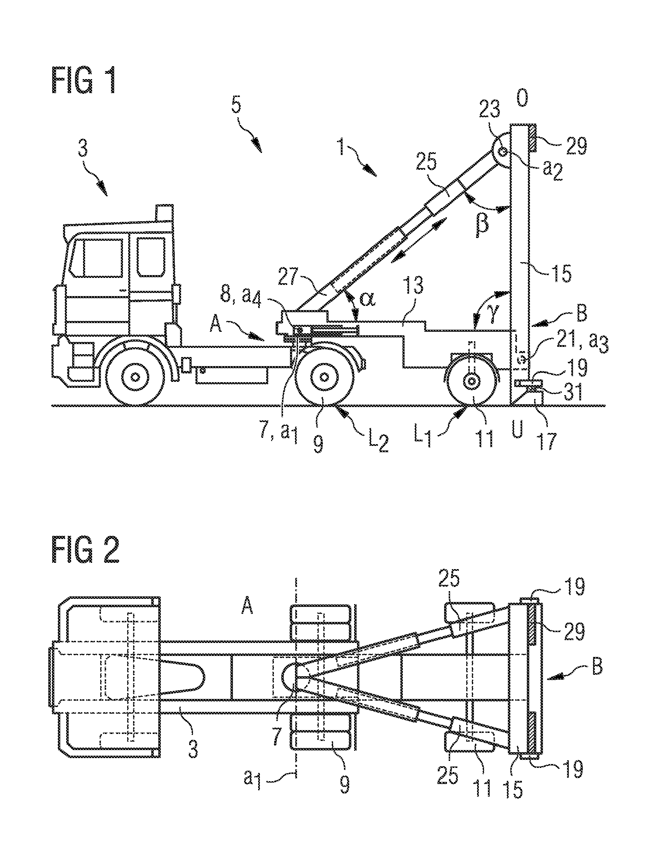

Figs. 1 and 2 show a transport subsystem 5 comprising a tractor 3 and a trailer 1 which is connected to the tractor 5 via a fifth-wheel coupling 7 functioning as a double hinge with a horizontal axis a₁ and a vertical axis. The trailer 1 comprises a rigid carrier structure 13 which is essentially horizontally orientated in the position depicted in the drawing, i.e. the loading position of the trailer 1. The carrier structure 13 has a first end region A in which it is connected to the tractor via the hinge 7 and connected to the ground in a second location L₂ by a roller 9. This roller 9 is realized as a wheelset of the tractor 3 comprising four wheels. The carrier structure 13 also has a second end region B where it rests directly on a roller 11, again realized as a wheelset, in a first location L₁. Furthermore, the trailer 1 comprises an essentially vertical structure 15, which is also rigid. The vertical structure 15 is attached in a lower end region U via a hinge 21 to the carrier structure 13 in its second end region B. In the lowest part of the lower end region U of the vertical structure 15 there is supplied a shelf 17 projecting from the plane of the vertical structure 15 away from the tractor 3, i.e. away from the carrier structure 13. In the same direction there are hooks 19 at either side of the vertical structure 15 which can each be activated by a two-way hydraulic cylinder (not shown) in the inside of the vertical structure 15. Furthermore, in the lower end region U and in an upper end region O of the vertical structure, also facing away from the carrier structure 13, there are two contact mats 31, 29.

While both the carrier structure 13 and the vertical structure 15 are not extendable in length, there is a connection structure 25 which is extendable. This connection structure 25 comprises two hydraulic beams which both connect the upper end region O of the vertical structure 15 and the first end region A of the carrier structure 13 via hinges 23, 8. The extendability of the connection structure 25 is realized by hydraulic cylinders 27 in the hydraulic beams.

Together, the carrier structure 13, the vertical structure 15 and the connection structure 25 make up a triangular frame with an angle α between the carrier structure 13 and the connection structure 25, an angle β between the connection structure 25 and the vertical structure 15, and an angle y, which is essentially 90° in the loading position, between the carrier structure 13 and the vertical structure 15.

Four horizontally orientated rotation axes a₁, a₂, a₃, a₄ can be made out in the transport system 5: A first axis a₁, along which the carrier structure 13 can be rotated with respect to the tractor 3, is realized by the hinge 7. The second axis a₂ is realized by the hinge 23 connecting the vertical structure 15 with the connection structure 25. The third axis a₃ is realized by the hinge 21 connecting the vertical structure 15 with the carrier structure 13, while the fourth axis a₄ is realized by the hinge 8 connecting the connection structure 25 with the carrier structure 13.

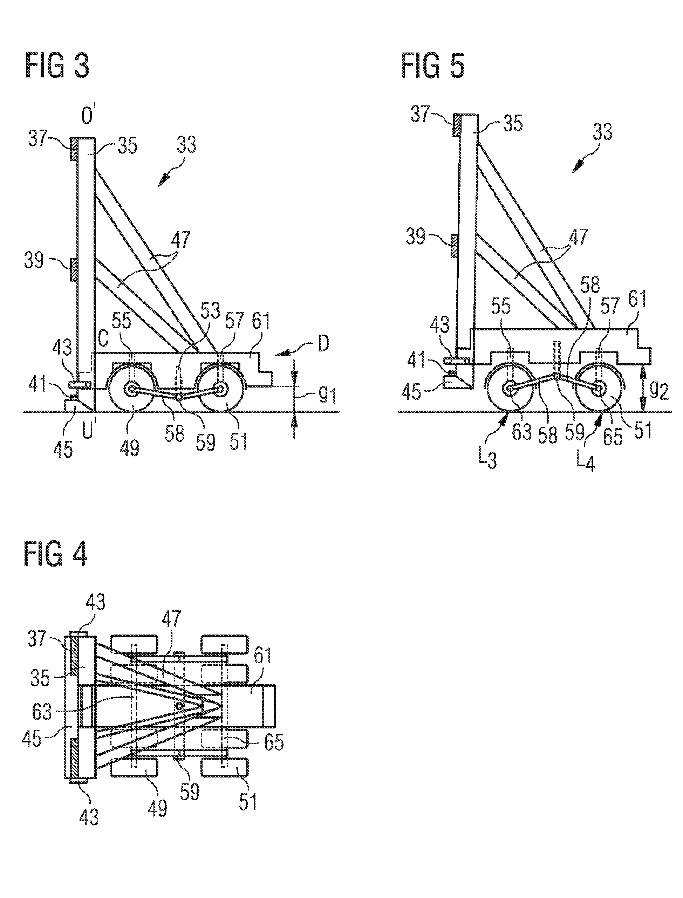

Figs. 3 and 4 show a trailer 33 realized as a dolly in a loading position, with a carrier structure 61, which is essentially horizontally orientated in this loading position. The carrier contains inside (not shown) a fluid reservoir, a fluid pump and a battery pack. The carrier structure 61 rests on two rollers 49, 51 realized as wheelsets of four wheels each with wheel axles 63, 65. The wheel axles 63, 65 are each connected to 15 t hydraulic cylindres 55, 57, which are interconnected by means of a hose (not shown) which makes sure that loads on the wheels are equally distributed. The wheel axles 63, 65 are further interconnected mechanically by beams 58 to a central hinge point 59 resting on a hydraulic damper 53.

The trailer 33 further comprises a rigid vertical structure 35 and connection beams 47 which are all not extendable in length. The vertical structure 35 is fixedly attached in a lower end region U' to a first end region C of the carrier structure 61 and in an upper end region O' to the connection beams 47. The connection beams 47 are also fixedly attached to the carrier structure 61 close to a second end region D. The carrier structure 61, the connection beams 47 and the vertical structure 35 therefore make up another essentially triangular frame, which is, in contrast to that of the trailer 1 according to an embodiment of the invention (cf. Figs 1 and 2), completely rigid and thus comprises no rotation axes.

On that side of the vertical structure 35 which faces away from the carrier structure 61, there is supplied a shelf 45, hooks 43 and three contact mats 37, 39, 41. These features are realized in an analogous way to the same features of the trailer 1, whereby one contact mat 39 is positioned in between the other two contact mats 37, 41 in a vertical extension.

The trailer 33 is shown in a loading position in Fig. 3. In that position the hydraulic cylindres 55, 57 have no or little fluid inside and thus, the rollers 49, 51 are in a close proximity of the carrier structure 61. The distance g₁ between the underside of the carrier structure 61 facing downwards to the ground and the ground itself is so small that the lower end region U' of the vertical structure touches ground or is very close to the ground. In such a position, a large load such as a tower of a wind turbine only needs to be slightly raised in order for the dolly 33 to get underneath the end of the load so that the load can be positioned on the shelf 45 of the vertical structure 35. The same principle is applied at the other longitudinal end. Alternatively, the load rests on a storage shelf or on legs so that no raising is necessary at all and the trailers can get underneath the end(s) of the load without any further ado. The hooks 41 can be used to fix the load to the vertical structure 35.

The same principle applies to attaching a large rigid load to the trailer 1 shown in Figs. 1 and 2. There, the shelf 17 is used as a basis for the load and the hooks 19 to fix it.

Therefore, using the trailer 1 in combination with dolly 33, the load can be fixed at either longitudinal end.

Fig. 5 depicts the same dolly 33 as in Figs. 3 and 4 in a transport position. Now, more fluid has been pumped into the hydraulic cylindres 55, 57 so that the carrier structure 61 has been raised away from the rollers 49, 51 and thus from the ground. The distance g₂ between the underside of the carrier structure 61 and the ground is therefore larger than the distance g₁. Therefore, if a large rigid load has been attached to the dolly 33, it is also raised above ground on the side of that longitudinal end at which it is attached to the dolly 33.

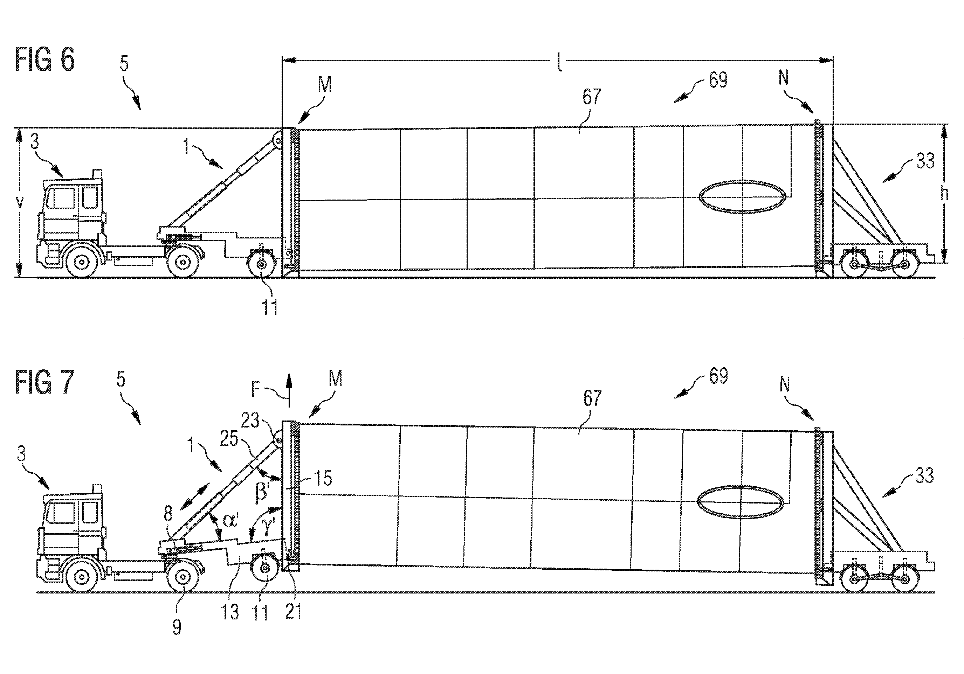

Examples of transport systems with large rigid loads attached are shown in Figs. 6 to 9.

Fig. 6 shows a transport system 69 with a transport subsystem 5 comprising a tractor 3 and a trailer 1 as explained in the context of Figs. 1 and 2. By the transport system a large load 67, which is the lower segment of a wind turbine tower, with a first longitudinal end M and a second longitudinal end N is transported. It is attached to the trailer 1 at its first longitudinal end M and to a dolly 33 at its second longitudinal end M. The dolly is according to the embodiment described in the context of Figs. 3 to 5. The segment 67 is round in a cross-sectional shape and has a diameter h which is essentially equal to an extension v of the vertical structures 15, 35 of the trailer 1 and the dolly 33 respectively. It is loaded both onto the trailer 1 and onto the dolly 33 in the manner described above, with its longitudinal ends resting partly on the contact mats 29, 31 and 37, 39, 41 which all serve to absorb shocks and thus to protect the load 67 during loading and transport.

The load 67 has a longitudinal extension 1 which is about double the length of the transport subsystem 5, i.e. the tractor 3 and the trailer 1 taken together.

Fig. 7 depicts the same transport system 69 in a transport position. Therefore, the dolly 33 has been put into a transport position as described in the context of Fig. 5.

The trailer 1 is also in a transport position which will be described in further detail: The length of the hydraulic beams of the connection structure 25 is extended while the load 67 is connected to the vertical structure 15. Due to the high weight of the load 67 and its stiffness the orientation of the vertical structure, i.e. the vertical alignment, can hardly be altered. Therefore, the angles a and β are reduced to smaller angles α' and β'. This means that angle y will automatically be increased to a larger angle γ'. This change of angles inherently means that with the connection structure 25 and the vertical structure 15 still being in the same orientation, the carrier structure 13 has to move upwards at its first end and a raising force F is inflicted onto the triangular frame. As a result, the roller 11 is raised as well. This effectively implies a raising of the vertical structure 15 together with the load 67.

As can be seen, both the trailer 1 and the dolly 33 require comparatively little space bearing in mind they stably carry a weight of approximately 100 tons. Realising the same result by means of cranes would require a lot more space and material for trailers.

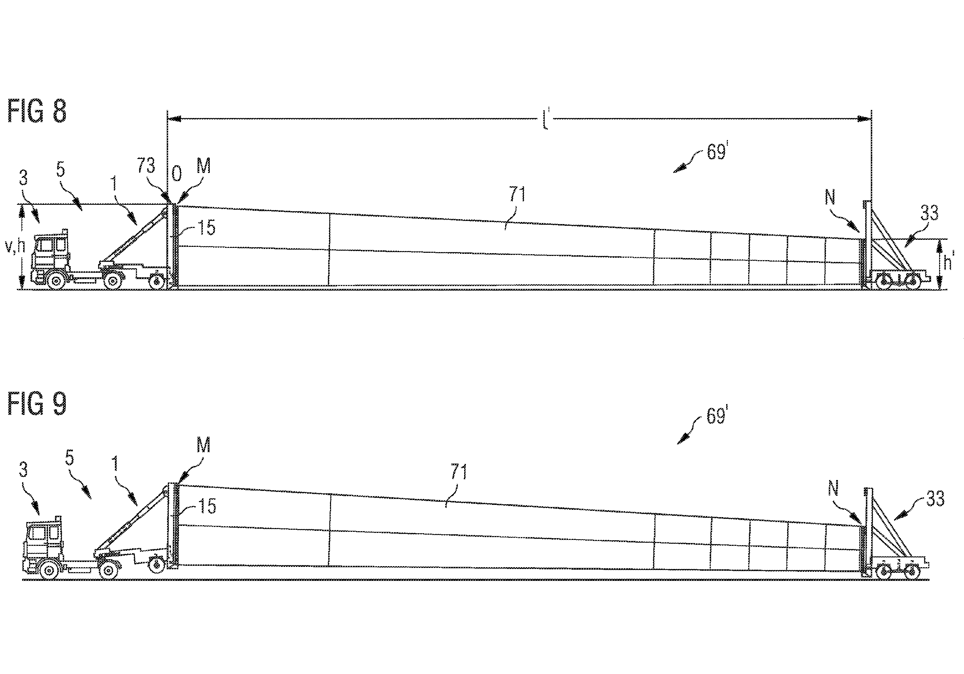

For purpose of further illustration, Figs. 8 and 9 show a similar transport system 69' with the same components except for a load 71 in the form of a top segment of a wind turbine tower, which is by far longer than segment 67 in Figs. 6 and 7. The diameter of the segment varies from a first diameter h which has essentially the same extension as the extension of the vertical structure 15 of the trailer 1 to a second diameter h' which is about half of first diameter h. Due to that difference in diameters, there is a small gap 73 in between the upper end region O of the vertical structure 15 of trailer 1 and the tower segment 71 in the loading position. This, however, can easily be filled in the course of raising the tower segment 71: The vertical structure 15 is automatically forced by the weight of the tower segment 71 to move into the direction of the gap 73 and thus to close the gap 73.

It may be noted that preferably, in order to transport different kinds of loads with the transport systems 69, 69' and/or with the transport sub-system 5 the shelves 17, 45, the hooks 19, 43 and the contact mats 29, 31, 37, 39, 41 are preferably such that the can be replaced and/or repositioned according to the size and extensions of the load which is to be raised and transported.

Although the present invention has been disclosed in the form of preferred embodiments and variations thereon, it will be understood that numerous additional modifications and variations could be made thereto without departing from the scope of the invention. While the wind turbine components were used as a basis for the description, the transport system according to the invention may be used to good effect in transporting any other large loads. As mentioned above, the dolly can also be realized as a trailer according to the invention.

For the sake of clarity, it is to be understood that the use of "a" or "an" throughout this application does not exclude a plurality, and "comprising" does not exclude other steps or elements.

## Claims

1. A trailer (1) for raising and transporting a large rigid load (67, 71) at at least a first longitudinal end (M) comprising a rigid carrier structure (13) with a first end region (A) and a second end region (B) resting - in a loading position - on the ground in a first location (L₁) directly by means of a first roller (11) and in a second location (L₂) by a second roller (9) either directly, or indirectly via a first hinge (7) with a horizontal rotation axis (a₁), which carrier structure (13) is essentially horizontally orientated in the loading position,
the trailer (1) further comprising a fixing arrangement (17, 19) to fix the load (67, 71) at its first longitudinal end (M) to the trailer (1) at a fixing point at the second end region (B) of the carrier structure (13) which is closer to the first roller (11) than to the second roller, and a raising arrangement (13, 15, 25) to raise the carrier structure (13) in the region of the first location (L₁) so that in a transport position the first roller (11) loses contact with the ground.

2. A trailer according to claim 1 comprising a substantially triangular frame consisting of
- the carrier structure (13),
- a rigid, essentially vertical structure (15) with a lower end region (U) and an upper end region (O) fixed rotatably around a horizontal axis (a₃) to the carrier structure (13) via a hinge (21) connecting the second end region (B) of the carrier structure (13) with the lower end region (U) of the vertical structure (15),
- a connection structure (25) extendable in length and fixed rotatably around horizontal axes (a₂, a₄) by means of hinges (23, 8) at one end to the first end region (A) of the carrier structure (13) and at the other end to the upper end region (O) of the vertical structure (15).

3. A trailer according to claim 2, whereby the axes (a₂, a₃, a₄) of all said hinges (23, 21, 8, 7) are parallel.

4. A trailer according to claims 2 or 3, whereby the vertical extension (v) of the vertical structure (15) has at least half the length (h) of the load (67, 71) in an extension perpendicular to its longitudinal direction.

5. A trailer according to any one of the preceding claims, whereby in order to raise the first roller (11), the carrier structure (13) is tiltable around a tilting axis (a₁), which tilting axis (a₁) is preferably arranged vertically above the second roller (9) or at a distance removed from the second roller (9) in a direction away from the first roller (11).

6. Transport system (5, 69, 69') comprising a tractor (3) and at least one trailer (1) according to any one of the preceding claims.

7. Transport system according to claim 6, whereby the trailer (1) is attached to the tractor (3) via the first hinge (7).

8. Transport system according to claim 6 or 7 comprising two trailers (1, 33) connectable to a large rigid load (67, 71) at both of its longitudinal ends, the trailers being preferably both according to any one of claims 1 to 5.

9. A method for raising a large rigid (stiff) load (67, 71) with a first longitudinal end (M) and a second longitudinal end (N) comprising the following steps:
a) transporting to the first longitudinal end (M) a first trailer (1) with a rigid carrier structure (13) with a first end region (A) and a second end region (B) resting - in a loading position - on the ground in a first location (L₁) directly by means of a first roller (11) and in a second location (L₂) by a second roller (9) either directly or indirectly via a first hinge (7) with a horizontal rotation axis (a₁), which carrier structure (13) is essentially horizontally orientated in the loading position,
b) fixing the load (67, 71) at its first longitudinal end (M) to the first trailer (1) at a fixing point which is closer to the first roller (11) than to the second roller (9),
c) raising the load (67, 71) at the first end (M) by raising the carrier structure (13) in the region of the first location (L₁) so that in a transport position the first roller (11) loses contact with the ground,
d) raising the load (67, 71) at its second end (N).

10. A raising method according to claim 9, whereby the carrier structure (13) is rotated around a horizontal rotation axis (a₁).

11. A raising method according to claim 10, whereby the carrier structure (13) is rotated around a horizontal rotation axis (a₁) of a first hinge (7).

12. A raising method according to any one of claims 9 to 11 whereby a trailer according to any of claims 2 to 8 is used and whereby the connection structure (25) is extended in length.

13. A raising method according to any one of claims 9 to 12, whereby the load (67, 71) is raised at its second longitudinal end by a second trailer in the same manner as in steps a) to c) and optionally the same manners as described in any one of claims 10 to 12 with respect to the second trailer.

14. A raising method according to any one of claims 9 to 13, whereby the load (67, 71) is raised at its second longitudinal end by a second trailer (33) comprising a rigid carrier structure (61) connected to the ground in both a first (L₃) and a second location (L₄) directly by a first (49) and a second roller (51), which carrier structure (61) is essentially horizontally orientated in a loading position and in a transport position which transport position is defined by a greater distance (g₂) of the carrier structure (61) from the first (49) and/or second roller (51) in comparison with the loading position.

15. A method for transporting a large rigid load (67, 71) comprising the steps of raising the load (67, 71) by means of a raising method according to any one of claims 9 to 14 and moving the raised load (67, 71) by moving by motor power at least one of the trailers (1, 33).
